(19) Europäisches Patentamt

European Patent Office

Office européen des brevets

(11) **EP 1 630 912 A1**

(12) **EUROPEAN PATENT APPLICATION**

(43) Date of publication:
**01.03.2006 Bulletin 2006/09**

(51) Int Cl.:
**H01S 3/109** *(2006.01)*  **H01S 3/108** *(2006.01)*

(21) Application number: **05018219.5**

(22) Date of filing: **23.08.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **23.08.2004 JP 2004242490**

(71) Applicant: **FURUKAWA CO., LTD.**
**Tokyo 100-8370 (JP)**

(72) Inventors:
• **Hamano, Akihide**
  **Furukawa Co. Ltd.**
  **Tsukuba-shi**
  **Ibaraki 305-0856 (JP)**
• **Omatsu, Takashige**
  **Yokohama-shi**
  **Kanagawa 244-0802 (JP)**

(74) Representative: **Sparing Röhl Henseler**
**Patentanwälte**
**European Patent Attorneys**
**Postfach 14 04 43**
**40074 Düsseldorf (DE)**

(54) **Frequency-doubled solid-state Raman laser**

(57)     A compact laser apparatus (1) capable of obtaining laser beams of multiple wavelengths from a single solid crystal (10) at the same time and excelling in reliability and efficiency is to be provided. A laser apparatus (1) uses a solid crystal consisting of a Raman effect substance as a laser medium (10), and is equipped with a laser oscillator (12) for exciting the laser medium (10) to generate laser beams, a reflector (16), a laser output mirror (18), for resonating the laser beam generated from the laser medium (10) and a harmonic element (22) for enabling by angle adjustment a single wavelength to be extracted out of multiple oscillation wavelengths. In an alternative embodiment the laser medium (10) is formed of a solid crystal having no Raman effect, and a separate solid crystal (11) of a Raman effect substance is provided in the resonator.

*F I G. 2 B*

**Description**

The present invention relates to a laser apparatus capable of selectively taking out a single wavelength out of multiple wavelengths including Stokes light and anti-Stokes light and the second harmonic oscillation of Raman light resulting from Raman conversion simultaneously with laser oscillation.

Various laser apparatuses are conventionally used as light sources for instruments for chemical measurement, micro-detectors using infrared absorption, isotope separation and so forth.

As a laser apparatus having a broad wavelength-variable range and providing high-output coherent light in a wide band, a variable-wavelength laser apparatus using a method of wavelength conversion by induced Raman scattering is proposed in JP5-249513A.

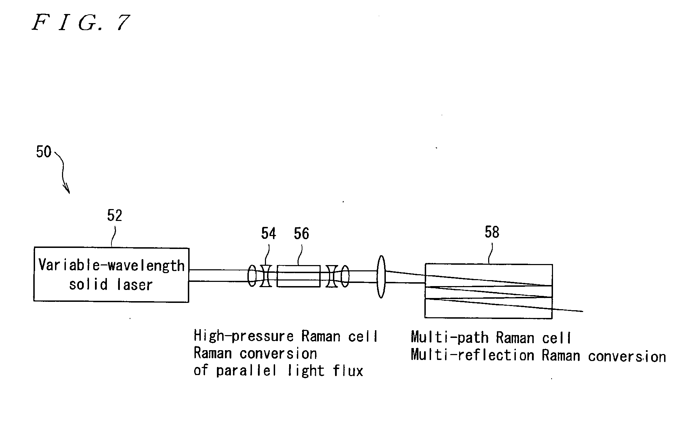

As shown in Fig. 7, a variable-wavelength laser apparatus 50 shapes a laser beam emitted from a variable-wavelength solid laser 52, which serves as the excitation light source, into a parallel beam with a parallel beam generating mechanism 54 consisting of a plurality of lenses, subjects this parallel beam to wavelength conversion by a high-pressure Raman cell 56, and subjects the wavelength-converted laser beam to further wavelength conversion by a multi-reflection type Raman cell 58. The high-pressure Raman cell 56 and the multi-reflection type Raman cell 58 are filled with hydrogen or heavy hydrogen as a Raman effect substance.

However, this variable-wavelength laser apparatus 50 requires selection of the wavelength of the laser beam emitted from the variable-wavelength solid laser 52 according to the desired wavelength. This factor results in greater complexity and larger size of the variable-wavelength laser apparatus 50, with a consequent increase in cost. Also, the Raman effect substance filling the high-pressure Raman cell 56 and the multi-reflection type Raman cell 58 is gaseous hydrogen or heavy hydrogen, which is susceptible to deterioration by leaking or otherwise, accordingly unreliable and also poor in oscillation efficiency.

An object of the present invention, attempted to solve the problems noted above, is to provide a compact and inexpensive laser apparatus capable of obtaining laser beams of multiple wavelengths from a single solid crystal at the same time and excelling in reliability and efficiency.

In order to achieve the object stated above, the invention is embodied in the following configuration. A laser apparatus according to the invention comprises an excitation light source unit for exciting a laser medium to generate a laser beam, a resonance unit for resonating the laser beam generated by the light source unit, and a harmonic element for modulating the wavelength of the laser beam, the laser apparatus being enabled to carry out multi-wavelength laser oscillation at the same time by forming the laser medium of a solid crystal of a Raman effect substance or forming the laser medium of a solid crystal of a non-Raman effect substance and providing the resonance unit with a solid crystal of a Raman effect substance, wherein a single wavelength is selectively extracted out of multiple wavelengths for oscillation of a visible region by adjusting the angle of the harmonic element relative to the optical axis. The solid crystal of the Raman effect substance may be a tungstate. The harmonic element may be one of LBO ($LiB_3O_5$), KTP ($KTiOPO_4$), PPKTP (periodically poled $KTiOPO_4$), KDP ($KH_2PO_4$) and BBO ($BaB_2O_4$).

In the laser apparatus according to the invention, for instance by using a Raman crystal $KGd(WO_4)_2$ as the solid crystal of the laser medium and having this solid crystal contain Nd, Yb, Er, Pr, Eu, Tb, Sm or the like as a laser-active substance, it is made possible to achieve simultaneous oscillation of the laser beam from the solid crystal, Stokes light having undergone Raman conversion of 901 $cm^{-1}$ in Raman shift quantity and anti-Stokes light.

Where Nd is used as a laser-active substance, fundamental wavelengths of 900 nm, 1067 nm, 1350 nm and so forth can be generated, and the simultaneous oscillation of Stokes light having undergone Raman conversion of 901 $cm^{-1}$ in Raman shift quantity from these fundamental wavelengths and anti-Stokes light takes place.

In order to achieve high conversion efficiency in a laser apparatus, the phase vector of the input beam and that of the generated beam should be coincident with each other, and phase mismatching represented by Equation (1) below should be zero:

$$\Delta k = k_3 - k_2 - k_1$$
$$= 2\pi n_3/\lambda_3 - 2\pi n_2/\lambda_2 - 2\pi n_1/\lambda_1 \ \dots \ (1)$$

where $\Delta k$ is the phase mismatch; $k_i$, the phase vector at the wavelength $\lambda_i$ and $n_i$, the refractive index at the wavelength $\lambda_i$.

The angle which makes $\Delta k$ zero is known as a phase-matching angle. Where the output is low, the relationship between conversion efficiency and phase matching is represented by Equation (2) below:

$$\eta \propto \{\sin(\Delta kL)/\Delta kL\}^2 \ \dots \ (2)$$

where η is the conversion efficiency, and L, the crystal length.

There is a phase-matching angle for each wavelength. In the case the fundamental wavelength is 1067 nm, by aligning the harmonic element with each phase-matching angle of 1181 nm and 1250 nm resulting from Raman scattering, it is possible to generate a green wavelength (534 nm), a yellow wavelength (591 nm) and a red wavelength (660nm), which are 1/2 wavelengths respectively. Thus, it is possible to selectively extract various wavelengths out of the resonance unit. An increase in phase mismatching would entail a sharp drop in conversion efficiency. If phase matching is achieved by adjusting the angle of the harmonic element relative to the optical axis, conversion efficiency will rise. Adjustment of the angle of the harmonic element is simple to accomplish and therefore advantageous compared to a case of achieving phase matching by adjusting temperature or the like. The phase-matching angle when the angle formed between the optical axis and the direction of beam propagation is 90 degrees or 0 degree is known as a non-critical phase-matching (NCPM) angle, and any other phase-matching angle, a critical phase-matching (CPM) angle.

It is possible to generate Raman wave by forming the laser medium of a solid crystal of a non-Raman effect substance such as $Y_3Al_5O_{12}$ (YAG), $YVO_4$ or $LiYF_4$ (YLF) and combining with it a solid crystal of a Raman effect substance such as $Al_2(WO_4)_3$, $CaWO_4$, $CsLa(WO_4)_2$, $Gd_2(WO_4)_3$, $KY(WO_4)_2$, $KEr(WO_4)_2$, $KGd(WO_4)_2$, $KLu(WO_4)_2$, $NaY(WO_4)_2$, $NaLa(WO_4)_2$, $NaGd(WO_4)_2$, $NaBi(WO_4)_2$, $PbWO_4$, $ZnWO_4$, $RbNd(WO_4)_2$, $SrWO_4$, $CdWO_4$, $LiNbO_3$, $KH_2PO_4$, $NaClO_3$ or $Ba(NO_3)_2$.

Using a solid crystal of a Raman effect substance for the laser medium contributes to increasing the oscillation efficiency. It is preferable to use a tungstate as the solid crystal of a Raman effect substance. Available tungstates include, for instance $Al_2(WO_4)_3$, $CaWO_4$, $CsLa(WO_4)_2$, $Gd_2(WO_4)_3$, $KY(WO_4)_2$, $KEr(WO_4)_2$, $KGd(WO_4)_2$, $KLu(WO_4)_2$, $NaY(WO_4)_2$, $NaLa(WO_4)_2$, $NaGd(WO_4)_2$, $NaBi(WO_4)_2$, $PbWO_4$, $ZnWO_4$, $RbNd(WO_4)_2$, $SrWO_4$ and $CdWO_4$.

Using LBO, KTP, PPKTP, KDP or BBO as the solid crystal of the harmonic element also contributes to increasing the oscillation efficiency.

Using a tertiary harmonic or a quartic harmonic from a higher-order harmonic element would give a laser beam of a shorter wavelength.

Therefore, where laser beams of multiple wavelengths are to be obtained at the same time, no extra equipment other than a laser oscillation apparatus is needed.

A laser apparatus according to the invention, which can provide laser beams of multiple wavelengths from single solid crystal, excel in reliability and oscillation efficiency, and is compact and inexpensive.

The invention will be explained in connection with embodiments as shown in the attached drawings.

Figs. 1A and 1B show the configuration of a laser apparatus according to the invention.
Figs. 2A and 2B show the configuration of a laser apparatus which is a variation of the invention.
Fig. 3 is a spectral diagram of oscillation having a yellow wavelength.
Fig. 4 is a spectral diagram of oscillation having a green wavelength.
Fig. 5 is a spectral diagram of oscillation having a red wavelength.
Fig. 6 is a spectral diagram of oscillation having multiple wavelengths.
Fig. 7 shows the configuration of a conventional variable-wavelength laser apparatus.

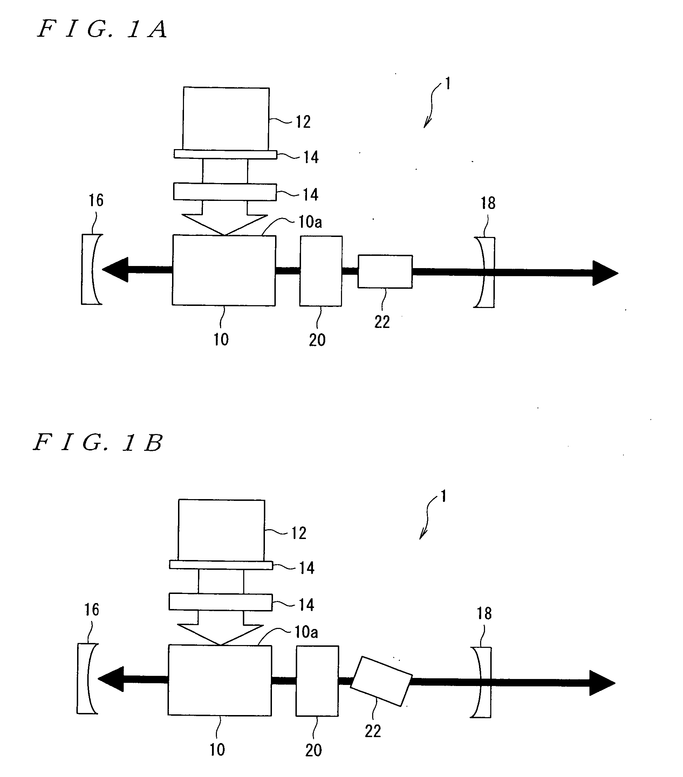

An embodiment of the laser apparatus 1 as shown in Fig. 1A, 1B comprises a laser medium 10, a laser oscillator 12, a condenser lens 14, a reflector 16, a laser output mirror 18, a Q switch 20 and a harmonic element 22.

The laser medium 10 is a solid crystal consisting of a Raman effect substance. As the Raman effect substance, a single crystal of $KGd(WO_4)_2$ is used for instance. It is also possible to use some other tungstate than $KGd(WO_4)_2$ or another Raman effect substance as the solid crystal of the laser medium 10.

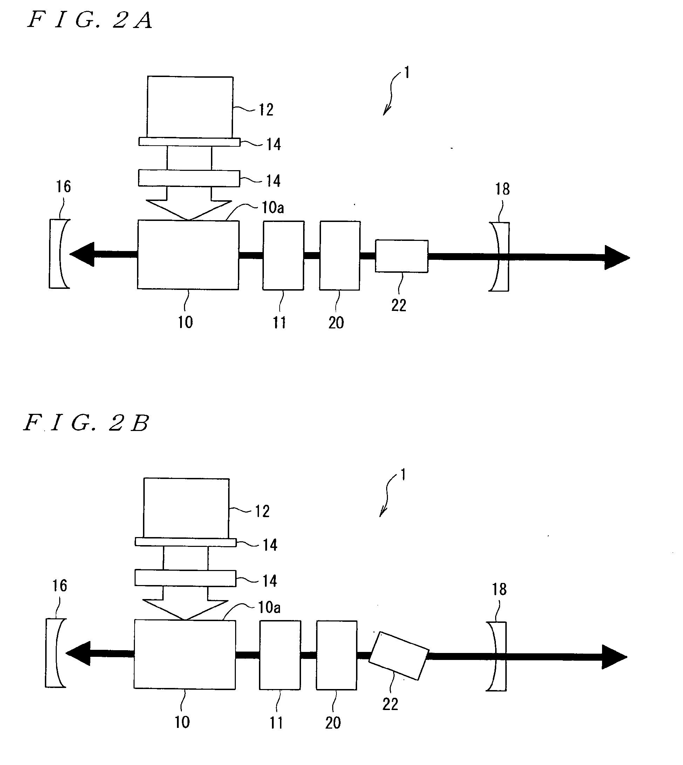

Also, as in the variation shown in Figs. 2A and 2B, it is also possible to generate a Raman wave by forming the laser medium 10 of a solid crystal of a non-Raman effect substance, such as $Y_3Al_5O_{12}$ (YAG), $YVO_4$ or $LiYF_4$(YLF) and combining with it a solid crystal 11 of a Raman effect substance such as $Al_2(WO_4)_3$, $CaWO_4$, $CsLa(WO_4)_2$, $Gd_2(WO_4)_3$, $KY(WO_4)_2$, $KEr(WO_4)_2$, $KGd(WO_4)_2$, $KLu(WO_4)_2$, $NaY(WO_4)_2$, $NaLa(WO_4)_2$, $NaGd(WO_4)_2$, $NaBi(WO_4)_2$, $PbWO_4$, $ZnWO_4$, $RbNd(WO_4)_2$, $SrWO_4$, $CdWO_4$, $LiNbO_3$, $KH_2PO_4$, $NaClO_3$ or $Ba(NO_3)_2$.

The laser medium 10 contains as the laser-active substance, for instance, 5 mol% of Nd. Instead of Nd, Yb, Er, Pr, Eu, Tb, Sm or the like may as well be used as the laser-active substance.

It is generally preferable for the laser medium 10 to have a greater content of the laser-active substance because the conversion efficiency will be correspondingly higher. However, if the concentration of the laser-active substance surpasses 20 mol% in a single crystal of $KGd(WO_4)_2$, it will become difficult to cut, grind or otherwise machine that single crystal. If the concentration of the laser-active substance further rises beyond 25 mol%, no single crystal structure can be formed. Or if the concentration of the laser-active substance is less than 0.01 mol%, no laser oscillation can take place. Therefore, it is required to keep the concentration of the laser-active substance in the single crystal of $KGd(WO_4)_2$ not more than 20 mol% and not less than 0.01 mol%, and preferably not more than 15 mol% and not less than 0.05 mol%.

The face 10a of the laser medium 10 to be irradiated with the excitation light is coated for the prevention of reflection against 809 nm, which is the oscillation wavelength of the excitation light and the absorption wavelength of Nd. The optical axis face of the laser medium 10 is coated for the prevention of reflection against 1067 nm, the oscillation wavelength of Nd, and 1181 nm and 1321 nm, the oscillation wavelengths of Stokes lights resulting from Raman scattering.

Incidentally, if the laser-active substance in the laser medium 10 is not Nd, the face 10a of the laser medium 10 will have to be coated for the prevention of reflection against the oscillation wavelength of the excitation light, and the optical axis face should also be coated for the prevention of reflection against the oscillation wavelength of that laser-active substance and against the oscillation wavelengths of the Stokes lights resulting from Raman scattering.

The laser oscillator 12 is, for instance, a semiconductor laser oscillator of a type generating a pulse of 100 to 10000 Hz, so configured as to constitute the excitation light source unit for the laser medium 10 and to be able to generate the excitation light. Incidentally, the laser oscillator 12 can as well be a continuous oscillation type semiconductor laser oscillator.

The condenser lens 14, positioned between the laser oscillator 12 and the laser medium 10, so configured as to be able to irradiate the laser medium 10 with the excitation light generated by the laser oscillator 12. The direction of irradiating the laser medium 10 by the excitation light is at an angle of 90 degrees to the optical axis. Incidentally, though the direction of irradiating the laser medium 10 by the excitation light is not limited to what forms an angle of 90 degrees to the optical axis, a substantially greater angle than 90 degrees would increase reflection by the irradiated face, which means a disadvantage of greater loss of irradiated energy. It is preferable for the direction of irradiating the laser medium 10 by the excitation light to be within a range of $90° \pm 45°$ relative to the optical axis. Obviously, irradiation in the direction of the optical axis, which is the usual way of exciting the laser medium 10, would pose no problem.

The reflector 16 and the laser output mirror 18 constitute a resonance unit, configured to be capable of resonating the beam generated by the laser medium 10.

The Q switch 20 and the harmonic element 22 are positioned on the optical axis between the laser medium 10 and the laser output mirror 18, with the Q switch 20 on the laser medium 10 side and the harmonic element 22 on the laser output mirror 18 side. The Q switch 20, intended for amplifying the output, is an AOQ switch using a $SiO_2$ crystal. The harmonic element 22, consisting of an LBO crystal for instance, is so configured as to permit adjustment of its angle relative to the optical axis. Incidentally, it is also possible to compose the Q switch 20 of a Cr:YAG crystal, which is a supersaturated absorbent, a supersaturated coloring matter and a semiconductor MQW type supersaturated absorbent element.

Next, the actions of this apparatus will be described.

An electric current is fed to the laser oscillator 12 and the laser medium 10 is irradiated with a laser-generated excitation light through the condenser lens 14.

Nd, which is the laser-active substance contained in the laser medium 10, can oscillate in fundamental wavelengths of 900 nm, 1067 nm, 1350 nm and so on, and generate Stokes lights and anti-Stokes lights resulting from the Raman conversion of the fundamental wavelengths by 901 $cm^{-1}$, which is the extent of Raman shift. The generable wavelengths of Stokes lights and anti-Stokes lights resulting from the Raman conversion of the fundamental wavelength 1067 nm by a Raman shift of 901 $cm^{-1}$ are shown in Table 1.

[Table 1]

| | Raman wave | |
|---|---|---|
| | Wavelength (nm) | No. of waves ($cm^{-1}$) |
| 10th order anti-Stokes light | 544 | 18382 |
| 9th order anti-Stokes light | 572 | 17481 |
| 8th order anti-Stokes light | 603 | 16580 |
| 7th order anti-Stokes light | 638 | 15679 |
| 6th order anti-Stokes light | 677 | 14778 |
| 5th order anti-Stokes light | 721 | 13877 |
| 4th order anti-Stokes light | 771 | 12976 |
| 3rd order anti-Stokes light | 828 | 12075 |
| 2nd order anti-Stokes light | 895 | 11174 |
| 1st order anti-Stokes light | 973 | 10273 |
| Fundamental wavelength | 1067 | 9372 |

Table continued

| | Raman wave | |
|---|---|---|
| | Wavelength (nm) | No. of waves (cm⁻¹) |
| 1 st order Stokes light | 1181 | 8471 |
| 2nd order Stokes light | 1321 | 7570 |
| 3rd order Stokes light | 1499 | 6669 |
| 4th order Stokes light | 1734 | 5768 |
| 5th order Stokes light | 2055 | 4867 |
| 6th order Stokes light | 2521 | 3966 |
| 7th order Stokes light | 3263 | 3065 |
| 8th order Stokes light | 4621 | 2164 |
| 9th order Stokes light | 7918 | 1263 |
| 10th order Stokes light | 27624 | 362 |

Adjustment of the angle of the harmonic element 22 relative to the optical axis enables a single wavelength to be extracted out of multiple wavelengths that are simultaneously generated. The laser apparatus 1 shown in Fig. 1A is in a state in which the angle of the harmonic element 22 relative to the optical axis is 0 degree, and that shown in Fig. 1B is in a state in which the harmonic element 22 is inclined relative to the optical axis. The same is true of the variation of the laser apparatus 1 shown in Figs. 2A and 2B. The laser apparatus 1 shown in Fig. 2A is in a state in which the angle of the harmonic element 22 relative to the optical axis is 0 degree, and that shown in Fig. 2B, in a state in which the harmonic element 22 is inclined relative to the optical axis.

Using the harmonic element 22 makes it possible to take out many different wavelengths existing between the reflector 16 and the laser output mirror 18.

<Example of Implementation 1>

By using the laser apparatus 1 according to the invention described above, a wavelength was selectively extracted out of multiple wavelengths that were simultaneously generated.

A current of 90 A was let flow into the laser oscillator 12, and the laser medium 10 was irradiated with the resultant laser-generated excitation light. The irradiation energy of the excitation light was set to 28 mJ. Laser oscillation of 1067 nm in fundamental wavelength was confirmed within the resonance unit consisting of the reflector 16 and the laser output mirror 18. It was confirmed that a Raman wave of 1181 nm and a Raman wave of 1321 nm were generated when the Q switch 20 was used. Then the harmonic element 22 was turned to vary the angle θ of the harmonic element 22 relative to the optical axis, and the resultant wavelength of oscillation was checked.

As a result, when the angle θ was -1 degree, the oscillation of a blue wavelength (485 nm) was observed.

When the angle θ was 0 degree, the oscillation of a yellow wavelength (590 nm) was observed.

When the angle θ was 1 degree, the oscillation of a green wavelength (534 nm) and a yellow wavelength was observed.

When the angle θ was 1.5 degrees, the oscillation of a green wavelength, a yellow-green wavelength (560 nm), a yellow wavelength and a red wavelength (660 nm) was observed.

When the angle θ was 2 degrees, the oscillation of a green wavelength was observed.

When the angle θ was 3 degrees, the oscillation of a red wavelength was observed.

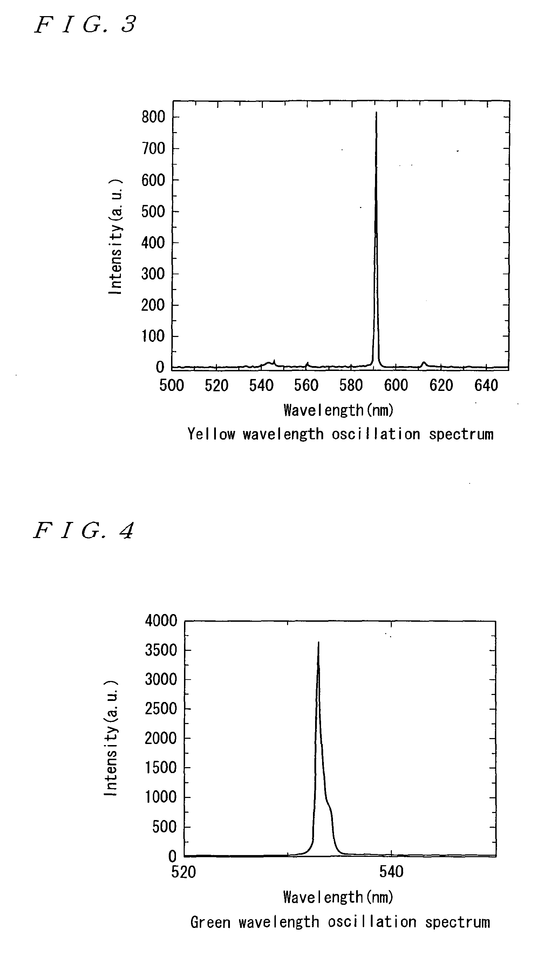

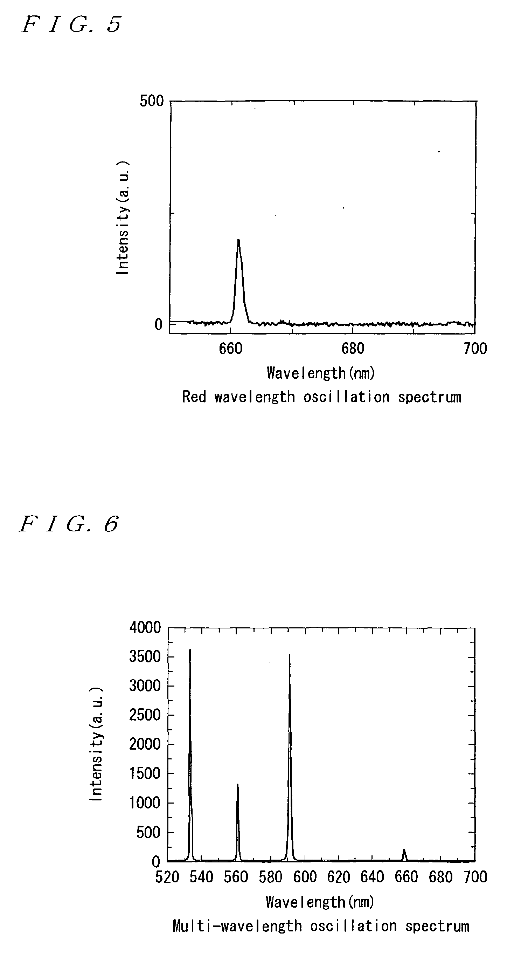

Fig. 3 is a spectral diagram of oscillation having a yellow wavelength; Fig. 4, a spectral diagram of oscillation having a green wavelength; Fig. 5, a spectral diagram of oscillation having a red wavelength; and Fig. 6, a spectral diagram of oscillation having multiple wavelengths, i.e. yellow wavelength, yellow-green wavelength, green wavelength and red wavelength.

<Example of Implementation 2>

By using the laser apparatus 1 according to the invention described above, a wavelength was selectively extracted out of multiple wavelengths that were simultaneously generated in the same way as in Example of Implementation 1 except that a KTP crystal was used as the harmonic element 22.

As a result, when the angle θ was -1.5 degrees, the oscillation of a blue wavelength was observed.

When the angle θ was 1 degree, the oscillation of a green wavelength was observed.

When the angle θ was 1.5 degrees, the oscillation of a green wavelength and a yellow wavelength was observed.

When the angle θ was 2 degrees, the oscillation of a yellow wavelength was observed.

When the angle θ was 2.5 degrees, the oscillation of a green wavelength, a yellow wavelength and a red wavelength was observed.

When the angle θ was 3 degrees, the oscillation of a red wavelength was observed.

<Example of Implementation 3>

By using the laser apparatus 1 according to the invention described above, a wavelength was selectively extracted out of multiple wavelengths that were simultaneously generated in the same way as in Example of Implementation 1 except that a KDP crystal was used as the harmonic element 22.

As a result, when the angle θ was -1.5 degrees, the oscillation of a blue wavelength was observed.

When the angle θ was 0 degree, the oscillation of a green wavelength was observed.

When the angle θ was 1 degree, the oscillation of a yellow wavelength was observed.

When the angle θ was 1.5 degrees, the oscillation of a green wavelength and a yellow wavelength was observed.

When the angle θ was 2 degrees, the oscillation of a red wavelength was observed.

When the angle θ was 2.5 degrees, the oscillation of a green wavelength, a yellow wavelength and a red wavelength was observed.

<Example of Implementation 4>

By using the laser apparatus 1 according to the invention described above, a wavelength was selectively extracted out of multiple wavelengths that were simultaneously generated in the same way as in Example of Implementation 1 except that a BBO crystal was used as the harmonic element 22.

As a result, when the angle θ was -1.5 degrees, the oscillation of a blue wavelength was observed.

When the angle θ was 0 degree, the oscillation of a green wavelength was observed.

When the angle θ was 1 degree, the oscillation of a yellow wavelength was observed.

When the angle θ was 1.5 degrees, the oscillation of a green wavelength and a yellow wavelength was observed.

When the angle θ was 2 degrees, the oscillation of a red wavelength was observed.

When the angle θ was 2.5 degrees, the oscillation of a green wavelength, yellow wavelength and red wavelength was observed.

<Example of Implementation 5>

By using the laser apparatus 1 according to the invention described above, a wavelength was selectively extracted out of multiple wavelengths that were simultaneously generated in the same way as in Example of Implementation 1 except that a PPKTP crystal was used as the harmonic element 22.

As a result, when the angle θ was -1.5 degrees, the oscillation of a blue wavelength was observed.

When the angle θ was 0 degree, the oscillation of a green wavelength was observed.

When the angle θ was 1 degree, the oscillation of a yellow wavelength was observed.

When the angle θ was 1.5 degrees, the oscillation of a green wavelength and a yellow wavelength was observed.

When the angle θ was 2 degrees, the oscillation of a red wavelength was observed.

When the angle θ was 2.5 degrees, the oscillation of a green wavelength, a yellow wavelength and a red wavelength was observed.

<Example of Implementation 6>

By using the laser apparatus 1 according to the invention described above, a wavelength was selectively extracted out of multiple wavelengths that were simultaneously generated in the same way as in Example of Implementation 1 except that the concentration of Nd contained in the laser medium 10 was set to 15 mol%.

As a result, when the angle θ was -1 degree, the oscillation of a blue wavelength was observed.

When the angle θ was 0 degree, the oscillation of a yellow wavelength was observed.

When the angle θ was 1 degree, the oscillation of a green wavelength and a yellow wavelength was observed.

When the angle θ was 1.5 degrees, the oscillation of a green wavelength, a yellow-green wavelength, a yellow wavelength and a red wavelength was observed.

When the angle θ was 2 degrees, the oscillation of a green wavelength was observed.

When the angle θ was 3 degrees, the oscillation of a red wavelength was observed.

<Example of Implementation 7>

By using the laser apparatus 1 according to the invention described above, a wavelength was selectively extracted out of multiple wavelengths that were simultaneously generated in the same way as in Example of Implementation 1 except that the concentration of Nd contained in the laser medium 10 was set to 0.05 mol%.
As a result, when the angle θ was -1 degree, the oscillation of a blue wavelength was observed.
When the angle θ was 0 degree, the oscillation of a yellow wavelength was observed.
When the angle θ was 1 degree, the oscillation of a green wavelength and a yellow wavelength was observed.
When the angle θ was 1.5 degrees, the oscillation of a green wavelength, a yellow-green wavelength, a yellow wavelength and a red wavelength was observed.
When the angle θ was 2 degrees, the oscillation of a green wavelength was observed.
When the angle θ was 3 degrees, the oscillation of a red wavelength was observed.

<Example of Implementation 8>

By using the laser apparatus 1 according to the invention described above, a wavelength was selectively extracted out of multiple wavelengths that were simultaneously generated in the same way as in Example of Implementation 1 except that a single crystal of $KY(WO_4)_2$ was used as the laser medium 10, the concentration of Nd contained in the laser medium 10 was set to 5 mol% and a PPKTP crystal was used as the harmonic element 22.
As a result, when the angle θ was -1.5 degrees, the oscillation of a blue wavelength was observed.
When the angle θ was 0 degree, the oscillation of a green wavelength was observed.
When the angle θ was 1 degree, the oscillation of a yellow wavelength was observed.
When the angle θ was 1.5 degrees, the oscillation of a green wavelength and a yellow wavelength was observed.
When the angle θ was 2 degrees, the oscillation of a red wavelength was observed.
When the angle θ was 2.5 degrees, the oscillation of a green wavelength, a yellow wavelength and a red wavelength was observed.

<Example of Implementation 9>

By using the laser apparatus 1 according to the invention described above, a wavelength was selectively extracted out of multiple wavelengths that were simultaneously generated in the same way as in Example of Implementation 1 except that a single crystal of $NaY(WO_4)_2$ was used as the laser medium 10, Yb was used as the laser-active substance, the concentration of Yb contained in the laser medium 10 was set to 5 mol% and a PPKTP crystal was used as the harmonic element 22. Further, the wavelength of the excitation light radiating from the laser oscillator 12 was set to 980 nm.
As a result, when the angle θ was -1.5 degrees, the oscillation of a blue wavelength was observed.
When the angle θ was 0 degree, the oscillation of a green wavelength was observed.
When the angle θ was 1 degree, the oscillation of a yellow wavelength was observed.
When the angle θ was 1.5 degrees, the oscillation of a green wavelength and a yellow wavelength was observed.
When the angle θ was 2 degrees, the oscillation of a red wavelength was observed.
When the angle θ was 2.5 degrees, the oscillation of a green wavelength, a yellow wavelength and a red wavelength was observed.

<Example of Implementation 10>

By using the laser apparatus 1 according to the invention described above, a wavelength was selectively extracted out of multiple wavelengths that were simultaneously generated in the same way as in Example of Implementation 1 except that a single crystal of $LiNbO_3$ was used as the laser medium 10, the concentration of Nd contained in the laser medium 10 was set to 3 mol% and a PPKTP crystal was used as the harmonic element 22.
As a result, when the angle θ was -1.5 degrees, the oscillation of a blue wavelength was observed.
When the angle θ was 0 degree, the oscillation of a green wavelength was observed.
When the angle θ was 1 degree, the oscillation of a yellow wavelength was observed.
When the angle θ was 1.5 degrees, the oscillation of a green wavelength and a yellow wavelength was observed.
When the angle θ was 2 degrees, the oscillation of a red wavelength was observed.
When the angle θ was 2.5 degrees, the oscillation of a green wavelength, a yellow wavelength and a red wavelength was observed.

<Example of Implementation 11>

By using the laser apparatus 1 according to the invention described above, a wavelength was selectively extracted out of multiple wavelengths that were simultaneously generated in the same way as in Example of Implementation 1 except that a Cr:YAG crystal was used for the Q switch 20.

As a result, when the angle θ was -1 degree, the oscillation of a blue wavelength was observed.

When the angle θ was 0 degree, the oscillation of a yellow wavelength was observed.

When the angle θ was 1 degree, the oscillation of a green wavelength and a yellow wavelength was observed.

When the angle θ was 1.5 degrees, the oscillation of a green wavelength, a yellow-green wavelength, a yellow wavelength and a red wavelength was observed.

When the angle θ was 2 degrees, the oscillation of a green wavelength was observed.

When the angle θ was 3 degrees, the oscillation of a red wavelength was observed.

<Example of Implementation 12>

By using the laser apparatus 1 according to the invention described above, a wavelength was selectively extracted out of multiple wavelengths that were simultaneously generated in the same way as in Example of Implementation 1 except that a single crystal of $PbWO_4$, 3 mm x 3 mm x 15 mm in size, was used as the laser medium 10, the concentration of Nd contained in the laser medium 10 was set to 0.5 mol% and a laser beam of 808 nm in wavelength and 20 Hz in frequency was used as the excitation light radiating from the laser oscillator 12.

When the angle θ was varied, the oscillation of a green wavelength, a yellow-green wavelength, a yellow wavelength and a red wavelength was observed.

Where a supersaturated coloring matter and a semiconductor MQW type supersaturated absorbent element were used for the Q switch 20, varying the angle θ made observable the oscillation of a green wavelength, a yellow-green wavelength, a yellow wavelength and a red wavelength.

Further, also where a continuous oscillation type semiconductor laser oscillator was used as the laser oscillator 12 and an excitation light of 808 nm in wavelength was continuously generated from the laser oscillator 12, varying the angle θ made observable the oscillation of a green wavelength, a yellow-green wavelength, a yellow wavelength and a red wavelength.

<Example of Implementation 13>

By using the laser apparatus 1 which is the variation of the invention shown in Figs. 2A and 2B, a wavelength was selectively extracted out of multiple wavelengths that were simultaneously generated.

A current of 90 A was let flow into the laser oscillator 12, and the laser medium 10 was irradiated with the resultant laser-generated excitation light. YAG ($Y_3Al_5O_{12}$) containing 1 mol% of Nd was used as the laser medium 10, and LBO, as the harmonic element 22. The irradiation energy of the excitation light was set to 20 mJ.

$Ba(NO_3)_2$ was used as the solid crystal 11 of a Raman effect substance, and the laser oscillation of 1064 nm in fundamental wavelength was observed within the resonance unit consisting of the reflector 16 and the laser output mirror 18. Using the Q switch made observable a Raman wave of 975nm, a Raman wave of 1197 nm and a Raman wave of 1367 nm.

Then the harmonic element 22 was turned to vary the angle θ of the harmonic element 22 relative to the optical axis, and the resultant wavelength of oscillation was checked.

As a result, when the angle θ was -1 degree, the oscillation of a blue wavelength 487 nm was observed.

When the angle θ was 1 degree, the oscillation of a yellow wavelength 598 nm was observed.

When the angle θ was 0 degree, the oscillation of a green wavelength 534 nm was observed.

When the angle θ was 2 degrees, the oscillation of a red wavelength 683 nm was observed.

<Example of Implementation 14>

By using the laser apparatus 1 which is the variation of the invention shown in Figs. 2A and 2B, a wavelength was selectively extracted out of multiple wavelengths that were simultaneously generated in the same way as in Example of Implementation 13 except that $YVO_4$ of 0.5 mol% in Nd concentration was used as the laser medium 10, $KGd(WO_4)$ as the solid Raman crystal 11 and PPKPT as the harmonic element 22.

The laser oscillation of 1064 nm in fundamental wavelength was observed within the resonance unit consisting of the reflector 16 and the laser output mirror 18. Using the Q switch made observable a Raman wave of 970 nm, a Raman wave of 1176 nm and a Raman wave of 1316 nm.

As a result, when the angle θ was -1 degree, the oscillation of a blue wavelength 485 nm was observed.

When the angle θ was 1 degree, the oscillation of a yellow wavelength 588 nm was observed.

When the angle θ was 0 degree, the oscillation of a green wavelength 534 nm was observed.

When the angle θ was 2 degrees, the oscillation of a red wavelength 658 nm was observed.

**Claims**

1. A laser apparatus comprising an excitation light source unit for exciting a laser medium (10) to generate a laser beam, a resonance unit for resonating the laser beam generated by the light source unit, and a harmonic element (22) for modulating the wavelength of the laser beam,
the laser apparatus being enabled to carry out multi-wavelength laser oscillation at the same time by forming the laser medium (10) of a solid crystal of a Raman effect substance or forming the laser medium (10) of a solid crystal of a non-Raman effect substance and providing the resonance unit with a solid crystal of a Raman effect substance, wherein a single wavelength is selectively extracted out of multiple wavelengths by adjusting the angle of the harmonic element (22) relative to the optical axis.

2. The laser apparatus according to Claim 1, wherein the solid crystal of the Raman effect substance is a tungstate.

3. The laser apparatus according to Claim 1 or 2, wherein the harmonic element is one of LBO ($LiB_3O_5$), KTP ($KTiOPO_4$), PPKTP (periodically poled $KTiOPO_4$), KDP ($KH_2PO_4$) and BBO ($BaB_2O_4$).

*F I G. 1 A*

*F I G. 1 B*

$F\ I\ G.\ 2A$

$F\ I\ G.\ 2B$

*F I G. 3*

Yellow wavelength oscillation spectrum

*F I G. 4*

Green wavelength oscillation spectrum

*F I G. 5*

Red wavelength oscillation spectrum

*F I G. 6*

Multi-wavelength oscillation spectrum

*F I G. 7*

50

52

Variable-wavelength
solid laser

54 56

58

High-pressure Raman cell
Raman conversion
of parallel light flux

Multi-path Raman cell
Multi-reflection Raman conversion

**European Patent Office**

**EUROPEAN SEARCH REPORT**

Application Number

EP 05 01 8219

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/028090 A1 (PASK HELEN M ET AL) 12 February 2004 (2004-02-12) * paragraphs [0097] - [0100], [0103], [0104], [0109], [0123] - [0128]; figure 11 * | 1-3 | H01S3/109 H01S3/108 |
| X | SIMONS J ET AL: "Small-scale, all-solid-state, frequency-doubled intracavity Raman laser producing 5 mW yellow-orange output at 598 nm" OPTICS COMMUNICATIONS, NORTH-HOLLAND PUBLISHING CO. AMSTERDAM, NL, vol. 229, no. 1-6, 2 January 2004 (2004-01-02), pages 305-310, XP004480936 ISSN: 0030-4018 * page 305, right-hand column, paragraph 2 - page 308, right-hand column, paragraph 3; figure 1 * | 1-3 | |
| X | OMATSU T ET AL: "Efficient 1181 nm self-stimulating Raman output from transversely diode-pumped Nd<3+>:KGd(WO4)2 laser" OPTICS COMMUNICATIONS ELSEVIER NETHERLANDS, vol. 232, no. 1-6, 1 March 2004 (2004-03-01), pages 327-331, XP004489630 ISSN: 0030-4018 * page 328, left-hand column, paragraph 2 - page 329, left-hand column, paragraph 2 * * page 329, right-hand column, paragraph 2 - page 330, right-hand column, paragraph 1 * * figure 1 * | 1-3 | TECHNICAL FIELDS SEARCHED (IPC) H01S |

-/--

The present search report has been drawn up for all claims

| Place of search | Date of completion of the search | Examiner |
|---|---|---|
| Munich | 16 November 2005 | Riechel, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 05 01 8219

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FINDEISEN J ET AL: "Diode-pumped yellow ns-Ba(NO3)2 and ps-KGd(WO4)2 Raman lasers" TECHNICAL DIGEST. SUMMARIES OF PAPERS PRESENTED AT THE CONFERENCE ON LASERS AND ELECTRO-OPTICS. POSTCONFERENCE EDITION. CLEO '99. CONFERENCE ON LASERS AND ELECTRO-OPTICS (IEEE CAT. NO.99CH37013) OPT. SOC. AMERICA WASHINGTON, DC, USA, 1999, pages 133-134, XP002354226 ISBN: 1-55752-595-1 * the whole document * | 1-3 | |
| A | EP 1 235 315 A (FURUKAWA CO., LTD) 28 August 2002 (2002-08-28) * the whole document * | 1 | |
| A | KAMINSKII A A ET AL: "PROPERTIES OF ND3+-DOPED AND UNDOPED TETRAGONAL PBWO4, NAY(WO4)2, CAWO4, AND UNDOPED MONOCLINIC ZNWO4 AND CDWO4 AS LASER-ACTIVE AND STIMULATED RAMAN SCATTERING-ACTIVE CRYSTALS" APPLIED OPTICS, OSA, OPTICAL SOCIETY OF AMERICA, WASHINGTON, DC, US, vol. 38, no. 21, 20 July 1999 (1999-07-20), pages 4533-4547, XP000854478 ISSN: 0003-6935 * the whole document * | 2 | **TECHNICAL FIELDS SEARCHED (IPC)** |

The present search report has been drawn up for all claims

| Place of search | Date of completion of the search | Examiner |
|---|---|---|
| Munich | 16 November 2005 | Riechel, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 05 01 8219

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2005

| Patent document cited in search report | | Publication date | Patent family member(s) | | Publication date |
|---|---|---|---|---|---|
| US 2004028090 | A1 | 12-02-2004 | WO | 0209246 A1 | 31-01-2002 |
| | | | EP | 1312141 A1 | 21-05-2003 |
| | | | JP | 2004504732 T | 12-02-2004 |
| EP 1235315 | A | 28-08-2002 | AU | 5424501 A | 29-08-2002 |
| | | | CZ | 20012768 A3 | 16-10-2002 |
| | | | JP | 2002252404 A | 06-09-2002 |
| | | | US | 2002118712 A1 | 29-08-2002 |

EPO FORM P0459

For more details about this annex : see Official Journal of the European Patent Office, No. 12/82